# EUROPEAN PATENT APPLICATION

(11) **EP 2 571 195 A1**
(43) Date of publication of application: **20.03.2013**
(21) Application number: 10851321.9
(22) Date of filing: 14.05.2010
(51) Int. Cl.: H04L 12/24

(54) **METHOD FOR CALCULATING PERCEPTION OF THE USER EXPERIENCE OF THE QUALITY OF MONITORED INTEGRATED TELECOMMUNICATIONS OPERATOR SERVICES**

(71) Applicant: Telefónica, S.A., 28013 Madrid (ES)
(72) Inventor: CUADRA SÁNCHEZ, Antonio, E-28013 Madrid (ES); CUTANDA RODRÍGUEZ, María del Mar, E-28013 Madrid (ES); LIOTTA, Antonio, E-28013 Madrid (ES); MENKOVSKI, Vlado, E-28013 Madrid (ES)
(74) Representative: Carpintero Lopez, Francisco
(86) International application number: PCT/ES2010/070324
(87) International publication number: WO 2011/141586

(57) **Abstract**

The present invention relates to a method for calculating user experience perception of the quality of monitored integrated telecommunications operator services. For this purpose, data from the monitoring of user services is used, along with questionnaires previously completed by a representative sample of users for subsequent combination by means of correlation algorithms, and after they have been put through automatic learning algorithms, obtaining a value for the quality of the experience, which implies an estimate of the quality of service perceived by the user of said service. Lastly, the network parameters that most affect the QoE as a function of the relevance thereof for predictions of quality are automatically identified in order to provide the values needed to attain a certain quality of experience as defined by the user.

## Description

As expressed in the title of this specification, the present invention relates to a method for calculating user experience perception of the quality of monitored integrated telecommunications operator services. The main field of application is the innovation in telecommunications operator monitoring services. For this purpose, the present invention comprises a method which proposes using data from the monitoring of user services along with questionnaires previously completed by a representative sample of users for subsequent combination by means of correlation algorithms and after they have been put through automatic learning algorithms obtaining a value for the quality of the experience, which implies an estimate of the quality of service perceived by the user of said service.

### Background of the Invention

The first Plain Old Telephone Service (POTS) activities were carried out in the second half of the 20^{th} century and were primarily based on estimating a quality indicator for clients called Mean Opinion Score (MOS, Mean Opinion Score).

The Mean Opinion Score (MOS) is a figure estimating the perceived quality of a conversation service, expressed in a complete range of 1 to 5, where 1 is the lowest perceived quality and 5 is the highest perceived quality. In particular, the MOS tests for voice are specified in ITU-T Recommendation P.800 "Methods for subjective determination of transmission quality".

ITU-T Recommendation P.805 "Subjective evaluation of conversational quality" was proposed in 2007 and included a series of quality evaluation mechanisms applied to conversation services. These evaluation mechanisms suggest how to measure the perceived quality of a conversation service using actual users.

Furthermore, algorithms such as the Perceptual Evaluation of Speech Quality (PESQ) or Perceptual Speech Quality Measure (PSQM) have been established today for measuring MOS. These methods consist of conducting a series of tests within a specific context (for example, voice calls) in terms of sending a stimulus (conversation) and comparing it with the signal received at the opposite end. Some of these algorithms can even be independent of the stimulus, but at the same time they analyze voice stream. In any case, these methods are based on conducting artificial tests in which actual users are not used because the function is carried out within a machine by means of active probes.

Recommendation P.862 "Perceptual Evaluation Of Speech Quality (PESQ): An objective method for end-to-end speech quality assessment of narrow-band telephone networks and speech codecs", describes an objective method for predicting the subjective quality of mobile telephony at 3.1 kHz (narrow band) and narrow band codecs.

PESQ can be considered a set of standards comprising a testing methodology for the automated evaluation of speech quality perceived by a user of a telephony system. ITU-T Recommendation P.862.3 "Application guide for objective quality measurement based on PESQ Recommendations" includes an example of a PESQ working scenario.

The original (reference) signal is thus compared with the received (degraded) signal and a PESQ score is calculated as a prediction of the subjective quality of each test impulse, which is done by means of active probes.

In terms of video services, Servicom has specified a method for measuring the perception of video quality called the advanced Perceptual Evaluation Of Video Quality (PEVQ) which is based on the foundational principles of PESQ.

On the other hand, other existing methods do not compare the original signal with the output signal, so they are called "non-intrusive": the measurement is carried out exclusively by the listener. A reference signal is not introduced in the network. In particular, ITU-T Recommendation P.563 defines a "Single-ended method for objective speech quality assessment in narrow-band telephony applications". However, the method is based on knowledge of the human language, so it is not necessary to use actual users as input. The results are not very precise since they must be used along with PESQ.

In summary, the current state of the art within Quality of the user experience (QoE) measurements mainly includes calculating the MOS from intrusive models (PESQ for VoIP, PEVQ for video) taking into account user opinions only when it is defined by the model and it is the only one involved. This can be valid for consistent services such as VoIP in PESQ, but it is not valid for highly dependent content services such as IPTV or MobileTV.

Opinion polls are not part of the current models, so there is no time comparison with network or business indicators.

Models calculating MOS with the perception of the user are based on intrusive tests, by means of the corresponding QoE measurement platform based on active probes. Some alternatives can non-intrusively use data sources but cannot be considered QoE measurement platforms but rather quality of service (QoS) measurement platforms.

Besides QoE measurement models, the state of the art within opinion poll analysis is starting to consider algorithms (statistical algorithms, artificial intelligence algorithms, etc.) to extrapolate user responses to obtain the same accuracy with a smaller amount of tests. In particular, the documents entitled "Optimized Online Learning for QoE Prediction" and "Predicting Quality of Experience in Multimedia Streaming" demonstrate that using automatic learning algorithms in multimedia service opinion polls enable using fewer user polls to attain the same precision than if a larger amount of data was used. These results could be applied to the QoE measurement models that take users' comments within the model into account.

Conventional quality monitoring systems reconstruct user services in order to have an overall view of each service that is used by any user. The features of each session are included in a specific detail record (XDR or IPDR for IP networks) which contains the data essential for quality purposes. The data sources of these methods are protocol data units generally obtained from the passive probes installed in the monitoring network. Based on the protocols exchanged within the monitoring network for a specific session, a user service (XDR, generic Detail Record) containing network, service and user data in terms of the quality of the experience is thus reconstructed.

Lastly, earlier papers on prediction models, such as "Optimized Online Learning for QoE Prediction" and "Predicting Quality of Experience in Multimedia Streaming" propose a new approach for the precise and adaptable construction of QoE prediction models using automatic learning classification algorithms based on subjective test data. Prediction models such as those herein described will be used in the present invention. These models can be used for real time QoE prediction. Since they provide high accuracy of over 90%, classification algorithms have become an indispensable component in the world of mobile multimedia QoE. This approach minimizes the need for subjective data, maintaining the high accuracy of online classifiers.

There are various problems in the current state of the art. The usual solutions for monitoring QoE are based on the conducting intrusive tests, so "actual" user traffic is not taken into account, but rather only the computer test (PESQ, PEVQ) is.

Some models such as P.563 passively calculate quality figures only for conversation services, without taking into account the validation of users in the model, so they cannot be considered as actual solutions for monitoring QoE. This means that the methods cannot be used to handle a large amount of data if used with actual user traffic.

Furthermore, current models do not include the opinion polls, so the variations in the features of the monitored services cannot be taken into account. These solutions do not link actual user traffic data with actual user polls. These two information sources are what mainly contribute to monitoring client perception, and it is essential to provide a method correlating both information sources.

On the other hand, the standardized methods do not consider the manner of extrapolating the results to have an overall perspective of the client perception of the experience for a service. Furthermore, XDRs include the information of any user when using any service, but only from the network and service perspective because the data sources are only telecommunications systems and it does not involve the user in any way.

### Description of the Invention

The present invention describes a method for calculating client perception of the user experience within a telecommunications operator, such as voice, video, data multimedia, etc., which is based on different data profiles (passive monitoring of data of actual users and polls for optimizing precision) and includes the correlation of both data profiles for to give a single final perspective of the client perception. This method is supported on a system for monitoring the network.

Questionnaires for the quality levels perceived by the client will be used to adjust the QoE by means of establishing a series of limits and thresholds that are applied in the monitoring indicators in order to establish some reference points in terms of perception.

The input data of the input network consist of a set of indicators of each service used, are collected by means of the passive probes deployed throughout the entire monitoring network (for example, XDR). These data provide an actual view of the service of any user because they are all permanently monitored. These indicators include a wide range of parameters of the multimedia coding domain, transport domain, as well as the terminal in which the communication means are presented and, lastly, the type of content that the user is experiencing.

This QoE approach analyzes the correlation of all these parameters for maximizing user experience and minimizing provider resources. The method generates a QoE value that can be referred to as an estimated experience score for any user of a service, which shows the satisfaction perceived by the end user when using the service. This QoE value will also be included in the XDR to be part of the monitoring information. Lastly, constructing prediction models using conventional automatic learning algorithms, techniques based on subjective test data, is proposed to obtain greater precision.

Therefore, in view of the problems of the current state of the art, the present invention has the following advantages over the known solutions:
■ This invention can predict how each client receives the services it uses without asking about the experience. The input information is extracted exclusively from the already deployed monitored network systems.
■ The methodology object of the invention allows a precise prediction of the MOS QoE values based on small initial subjective studies in real time environments. This is done through an innovative approach of using automatic learning algorithms for constructing prediction models in the data based on subjective studies.
■ Due to the flexibility of the method, only one very limited set of users needs to be involved to adjust the model, which is based on automatic learning techniques. The real time operating capacity of this method allows viewing the service when the client is using it. It further allows quantifying the accuracy of the prediction of the quality perceived by the clients for each service and which parameters of the service most affect user experience.
■ The solution can thus provide a realistic view of a service used by any user as a function of a unique indicator (MOS), the precision thereof and the quality of service attributes that have contributed to the perception that clients have of said service.
■ The use of this method can be applied to a network operator or service provider to have a reliable tool to know the opinion of the clients of any service. Therefore, this method allows establishing a realistic approach for monitoring QoE which can be used for different purposes, such as service planning, marketing campaigns and a more precise management of company-client relations.

Therefore, the present invention consists on one hand of a method for calculating user experience perception of the quality of monitored integrated telecommunications operator services, any type of service being able to be monitored. This method comprises, network data obtained by means of monitoring platforms previously deployed in network operators for monitoring the user services and experience questionnaires relating to a used service which have been previously completed by a set of users at least as input data, characterized in that it comprises the following phases:
i) combining the network data along with the responses to said question by means of conventional correlation algorithms for each question on the experience questionnaire;
ii) generating a training data set for each question on the questionnaire where the result of the combination of phase i) is stored;
iii) entering the training data sets in automatic learning algorithms, one prediction model being generated for each training data set;
iv) combining together the prediction models generated in the preceding phase by means of a weighted vote system generating a single final prediction model; and,
v) generating a quality of experience MOS value for each piece of network data by means of a quality of experience prediction platform in which the prediction model generated in phase iv) is integrated.

The correlation algorithms of the phase of combining network data, phase i), additionally identify the network data and the questionnaire data which are combined by means of a unique identification key of the fields of user identifier comprising a telephone number of the user that completed the questionnaire and an IP address assigned to said user, of served content identifier where the type of content is specified and of service timestamp, comprising the instant in which the service has been used.

The training data stored in phase ii) contain the most significant parameters contributing to the quality of experience, said parameters being selected from, type of content, service result, user agent, losses of sequence, losses of consent, packet loss rate, packet loss percentage, packet loss burst, maximum, minimum and mean performance values, delay and delay variation and a combination thereof when the services are those offered over IP networks.

The mentioned network data that are monitored for being used as input of the invention comprise information about IP network services offered by telecommunications operators selected from IP television (IPTV, TVoDSL, HDTVoIP, IPTV based on IMS, FTTH TV, GPON TV, WiMax TV, Mobile TV, 3G TV, 4G TV, videostreaming, Internet TV, IPTV-DTH) and the sub-services thereof (video on demand, pay-per-view, multibroadcast TV, general broadcast TV, hybrid broadband multibroadcast (HbbTV), P2PTV), IP telephony (VoIP, Internet telephony, voice over broadband (VoBB), IMS-based VoIP, ToIP, IP video telephony, multi-conference over IP) and the sub-services thereof (voice, data, instant messaging, presence, record), Internet services (web browsing, e-mail, file hosting, videostreaming, XML transactions) and particular telecommunications operator services (Messaging, MMS, SMS, signaling, SS7, roaming, accounting, invoicing and authentication). The training record generated in phase iii) comprises the most significant parameters for contributing to calculating user experience, said parameters being selected from type of content, service result, user agent, losses of sequence, losses of consent, packet loss rate, packet loss percentage, packet loss burst, maximum, minimum and mean performance values, delay and delay variation and a combination thereof when the services are those offered over IP networks. The automatic learning algorithm of this phase automatically selects the parameters as a function of the relevance thereof for predictions of quality. The most significant parameters can be any of those available to the network monitoring system, though the most common parameters are performance, packet loss rate and delay.

The votes of the weights of phase v) are modeled by means of automatic learning regression models and the quality of experience prediction platform comprises parameters selected from:
● confidence prediction;
● network parameters contributing to calculating user experience selected from type of content, service result, user agent, losses of sequence, losses of consent, packet loss rate, packet loss percentage, packet loss burst, maximum, minimum and mean performance values, delay and delay variation and a combination thereof; and,
● a combination thereof.

The automatic learning algorithm of phase iii) of the method automatically identifies the network parameters that most affect the QoE as a function of the relevance thereof for predictions of quality. This is carried out in order to provide the values needed to attain a certain quality of experience defined by the user. This method comprises the following steps:
- Identifying the network parameters that have contributed the most to the quality of experience representing the QoE prediction model by means of a decision tree in the geometric space of the network parameters contributing to the quality of the experience;
- Iteratively entering in the automatic learning algorithm of phase iii) different values of the network parameters until achieving the desired quality of experience, QoE MOS value; and,
- Returning to the user the values of the network parameters that result in the QoE MOS value required by the user so that said user modifies said parameters.

In turn, once the QoE prediction model has been represented by means of a decision tree in the geometric space of the network parameters contributing to the quality of the experience, the following steps are taken:
- marking the target regions based on which the QoE is calculated, said target regions being defined by the set of leaves of the prediction model of the decision tree;
- testing each branch in the path from the root node of the tree to the leaf to define the limits of the target region;
- depicting the values of the session as a dot in the space defined in the preceding step;
- calculating the modification needed as the geometric distance to the target region, which entails moving the dot in the previously defined space.

The QoE algorithm thus indicates a specific number of parameters and the values that must be taken (increasing or decreasing) to improve the user experience. This automatic method will depend on the training model, the values of the particular parameters for each session, and the expected quality of the experience. In fact, the algorithm is capable of identifying the parameters that have most considerably contributed to the perception proposing a threshold for each session from which the quality of the experience would be desirable.

In the present invention, the QoE prediction model that will be applied to the prediction platform is established in a first modeling phase. Once the model has been established, the second (stationary) phase uses it in a stationary manner, using the network data as input, and generating a MOS value for each data network.

The network data are obtained from the monitoring network, such as PSTN, PLMN, ATM, Frame Relay, SDH, PDH, TDM, SS7, GSM, GPRS, UMTS, HSDPA, HSUPA, LTE, SAE, WiMAX, Wi-Fi, IP, MPLS, NGN, IMS, IPTV, MobileTV, etc.

In a first step the monitoring data are combined with the corresponding questionnaires to create a training set serving as input to the QoE prediction models.

Once the data are combined within the correlation sub-step, a new record is created for each piece of subjective data and each piece of network data, said record containing the most significant parameters that can contribute to the QoE. For each parameter of the subjective data (i.e., for each question on the questionnaire), the method creates a training set by means of where the result of the combination of the network data with the questionnaires is stored. Each of the training sets is used as input for the automatic learning algorithms for obtaining the prediction models. These prediction models predict the values of the subjective response of the questionnaires as a function of the input data.

Different types of prediction models can be applied depending on the scenario, such as decision trees, support vector machines, Bayesian networks, artificial neural networks, etc.

Once a prediction model has been established for each question on the questionnaire, a final prediction model is defined which combines all the predictions in a single QoE MOS value. Said predictions are combined using a weighted vote scheme, where the votes for the weights are modeled according to automatic learning regression models. Different regression models such as linear regression, SMO regression, etc., can be constructed for the final prediction model based on the training data set of the last of the questions on the questionnaires.

Once the final QoE prediction model is established, it is implemented in the QoE prediction platform, which can also be part of any existing monitoring system. A MOS value for each new piece of data of the data network is thus calculated in real time. Input data from users do not need to be used in this stationary phase.

In addition to the MOS value, the prediction platform can include other parameters such as the confidence prediction or the network parameters which can contribute to a larger extent to obtaining the QoE.

### Brief Description of the Drawings

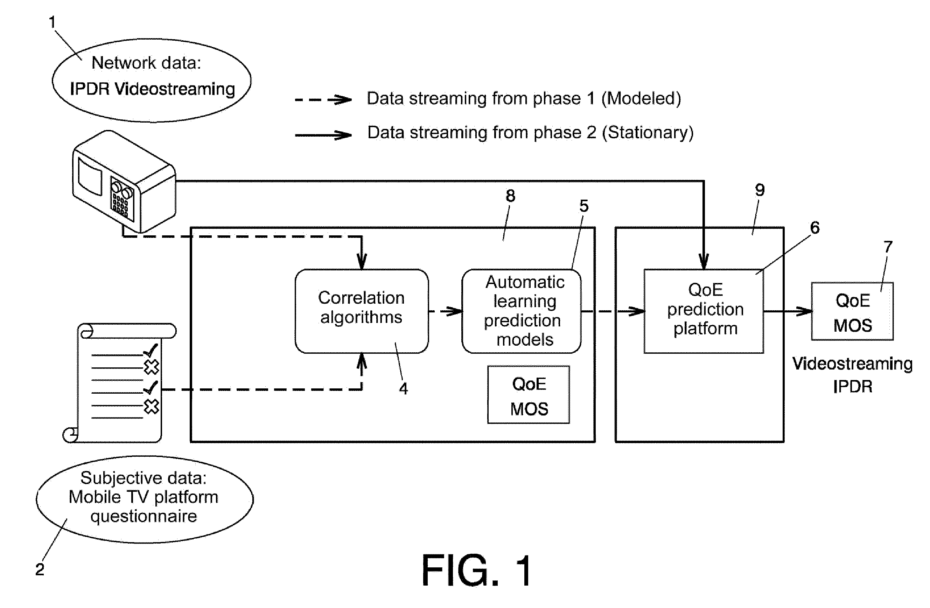

Figure 1 shows a flowchart of the method for calculating user experience perception of the quality of monitored integrated telecommunications operator services in a particular case.

### Description of an Embodiment of the Invention

A description of an embodiment of the invention is provided below with an illustrative and non-limiting character, making reference to the reference numbers used in the figure.

The invention relates to a method for calculating user experience perception in videostreaming services in mobile television platforms which can be extrapolated to other multimedia services such as VoIP, IPTV, etc.

The input data of the network are the IP detail records (IPDR) (1) acquired from the network by means of passive probes, an IPDR' record being generated at the output for each user of a service from the videostreaming protocols involved, such as RTP, RTSP, RTCP...

The most important parameters affecting the client experience are: content, user identifier, server identifier, packet loss, delay, jitter, performance, start time and error.

Detailed specifications and specific fields of these IPDRs (1) can be found in the recommendation "End-to-End Quality of Service Monitoring in Convergent IPTV Platforms".

In order to obtain the most precise client information, a questionnaire specific for this method (2) is created. The questions and possible responses are described below:
1. What type of content did you see? News, videos, entertainment, documentary, movie or TV show, cartoon and sports.
2. How long was the video delayed before it started to play?
   No delay, short delay, intermediate delay and long delay.
3. Did you experience frozen or interrupted video images?
   No, a few, some and many.
4. Did you experience audio interruptions?
   No, a few, some and many.
5. How much pixelation (large blocks of color) did you experience?
   None, very little, some and a lot.
6. Did you hear noises or distortions in the audio?
   No, a few, some and a lot.
7. Did you have problems with audio and video synchronization?
   No, a few, some and a lot.
8. How did you perceive the quality of the colors?
   Excellent, acceptable, poor and unacceptable.
9. How did you perceive the definition (sharpness) of the video?
   Excellent, acceptable, poor and unacceptable.
10. What was your overall perception of the quality?
   Excellent, very good, good, not very good and very bad.

In the modeling phase (8), the key component in the correlation algorithms (4) is the definition of unique attributes in both data sets (network data and questionnaire data) allowing suitable correlation thereof. The correlation algorithm (4) is based on the following values:

| Questionnaire Data | Network Data |
|---|---|
| Initial video test time | Initial network date and time |
| Final video test time | Final network date and time |
| Viewing time | Time viewed |
| Viewed content | URL content |

The prediction model (5) used in this embodiment is constructed from the C4.5 automatic learning algorithm along with AdaBoost (adaptive boosting), an algorithm that creates a set of classifiers. AdaBoost is a meta-algorithm and can be used in combination with many other automatic learning algorithms to improve their performance. AdaBoost creates later classifiers, emphasizing data that may have previously been incorrectly classified.

Lastly, in the stationary phase (9) the model combines all the classifiers together into a single set with a weighted vote. Furthermore, greater accuracy of the model is obtained by using aggregation techniques based on the proximity of two nearby response values (for example, "excellent" and "very good" are two of the possible responses with very similar subjective values). The weights of the model in the final prediction model are acquired by means of the support vector machine (SVM) regression algorithm. All the responses are thus combined with a regression model to give a unique MOS QoE value (7).

In summary, the models pre-configured for each question about perceived quality are:
● Each model is based on the data from the subjective questionnaires using the Weka 3.7 ML platform.
● The models are constructed using AdaBoost with J48 (C4.5) algorithms.
● The final model is constructed with the SMO regression algorithm.

The prediction model is embedded in the QoE prediction platform, which is connected to the monitoring system.

The output of the QoE prediction platform is an enlarged set of the input IPDRs, called IPDR', which aggregates the following attributes for each IPDR':
● QoE MOS.
● Confidence prediction.
● Parameters of quality of service that most affect QoE MOS.

The application is envisaged to be highly configurable and adaptable to different functional configurations:
● Portability system
● Variable type of input and output data.
● Prediction models that are configurable in number and type.
● Dynamically loaded prediction models.

## Claims

1. Method for calculating user experience perception of the quality of monitored integrated telecommunications operator services, where said method comprises, network data obtained by means of monitoring platforms previously deployed in network operators for monitoring the user services and experience questionnaires relating to a used service which have previously been completed by a set of users at least as input data, **characterized in that** it comprises the following phases:
i) combining the network data along with the responses to said question by means of conventional correlation algorithms for each question on the experience questionnaire;
ii) generating a training data set for each question on the questionnaire where the result of the combination of phase i) is stored;
iii) entering the training data sets in automatic learning algorithms, one prediction model being generated for each training data set;
iv) combining together the prediction models generated in the preceding phase by means of a weighted vote system generating a single final prediction model; and,
v) generating a quality of experience MOS value for each piece of network data by means of a quality of experience prediction platform in which the prediction model generated in phase iv) is integrated.

2. Method for calculating user experience perception of the quality of monitored integrated telecommunications operator services according to claim 1, **characterized in that** the correlation algorithms of the phase of combining network data identify the network data and the questionnaire data which are combined by means of a unique identification key of the following fields:
● user identifier comprising a telephone number of the user that completed the questionnaire and an IP address assigned to said user;
● served content identifier where the type of content is specified; and,
● service timestamp, comprising the instant in which the service has been used.

3. Method for calculating user experience perception of the quality of monitored integrated telecommunications operator services according to claim 1, **characterized in that** the training data stored in phase ii) contain the most significant parameters contributing to the quality of experience, said parameters being selected from type of content, service result, user agent, losses of sequence, losses of consent, packet loss rate, packet loss percentage, packet loss burst, maximum, minimum and mean performance values, delay and delay variation and a combination thereof when the services are those offered over IP networks.

4. Method for calculating user experience perception of the quality of monitored integrated telecommunications operator services according to claim 1, where the votes of the weights of phase v) are modeled by means of automatic learning regression models.

5. Method for calculating user experience perception of the quality of monitored integrated telecommunications operator services according to claim 1, where the network data comprise information about IP network services offered by telecommunications operators selected from IP television and its sub-services, IP telephony and its sub-services, Internet services and particular telecommunications operator services.

6. Method for calculating user experience perception of the quality of monitored integrated telecommunications operator services according to claim 1, **characterized in that** the training record generated in phase iii) comprises the most significant parameters for contributing to calculating user experience, said parameters being selected from type of content, service result, user agent, losses of sequence, losses of consent, packet loss rate, packet loss percentage, packet loss burst, maximum, minimum and mean performance values, delay and delay variation and a combination thereof when the services are those offered over IP networks.

7. Method for calculating user experience perception of the quality of monitored integrated telecommunications operator services according to claim 1, **characterized in that** in phase v) the quality of experience prediction platform comprises parameters selected from:
● confidence prediction;
● network parameters contributing to calculating user experience selected from type of content, service result, user agent, losses of sequence, losses of consent, packet loss rate, packet loss percentage, packet loss burst, maximum, minimum and mean performance values, delay and delay variation and a combination thereof; and,
● a combination thereof.

8. Method for calculating user experience perception of the quality of monitored integrated telecommunications operator services according to claim 6, **characterized in that** the automatic learning algorithm of phase iii) automatically identifies the network parameters that most affect the QoE as a function of the relevance thereof for predictions of quality in order to provide the values needed to attain a certain quality of experience defined by the user, comprises the following steps:
- Identifying the network parameters that have contributed the most to the quality of experience representing the QoE prediction model by means of a decision tree in the geometric space of the network parameters contributing to the quality of the experience;
- Iteratively entering in the automatic learning algorithm of phase iii) different values of the network parameters until achieving the desired quality of experience, QoE MOS value; and,
- Returning to the user the values of the network parameters that result in the QoE MOS value required by the user so that said user modifies said parameters.
